# DEMANDE DE BREVET EUROPEEN

(11) **EP 0 767 365 A1**
(43) Date de publication de la demande: **09.04.1997**
(21) Numéro de dépôt: 96402066.3
(22) Date de dépôt: 27.09.1996
(51) Int. Cl.: G01M 1/02, G01M 1/32

(54) **Equilibreuse par addition de masses d'équilibrage**

(30) Priorité: 04.10.1995 FR 9511654
(71) Demandeur: MULLER BEM, F-28000 Chartres (FR)
(72) Inventeur: Coetsier, Paul, 77400 Pomponne (FR); Sauzay, Olivier, 28630 Coudray (FR)
(74) Mandataire: Boutin, Antoine

(57) **Abrégé**

Une équilibreuse par addition de masses d'équilibrage comporte un organe 16 déplaçable parallèlement à l'axe d'entraînement 14 en rotation d'une roue à équilibrer apte à pivoter sur un rayon de pivotement constant. L'organe déplaçable 16 est monté à pivotement vers le bas pour repérer un plan et un diamètre d'équilibrage dans un repère à coordonnées cylindriques et pour poser dans une deuxième étape une masse d'équilibrage à un emplacement calculé.

Application à l'équilibrage de roues de véhicules.

## Description

L'invention est relative à une équilibreuse par addition de masses d'équilibrage, notamment pour roue de véhicule, du type comportant un organe déplaçable parallèlement à l'axe d'entraînement en rotation du corps tournant ou de la roue à équilibrer.

On connaît des équilibreuses du type précité, dans lesquelles l'organe déplaçable pivote sur un rayon de pivotement sensiblement constant, de manière à définir un repère de coordonnées cylindriques dont l'axe est parallèle à l'axe d'entraînement en rotation du corps tournant ou de la roue à équilibrer.

La combinaison du déplacement longitudinal et du pivotement définit un repère de coordonnées cylindriques dont l'axe est parallèle à l'axe d'entraînement en rotation du corps tournant ou de la roue à équilibrer. Ces coordonnées cylindriques sont obtenues par des capteurs de mesure reliés à une centrale de traitement des mesures et de calcul pour définir un plan et un diamètre d'équilibrage. Le plan et le diamètre d'équilibrage sont utilisés pour calculer la masse d'équilibrage à additionner à la roue ou au corps tournant à équilibrer.

Les dispositifs de type connu présentent cependant l'inconvénient de ne pas être utilisables facilement pour poser une masse d'équilibrage après la mesure.

Pour remédier à cet inconvénient, le document EP 0 586 856 prévoit d'utiliser un dispositif palpeur servant à explorer les dimensions d'une roue pleine, un dispositif d'identification de position relié au dispositif palpeur et une mémoire reliée au dispositif d'identification de position et dans laquelle peuvent être mémorisés le rayon et le plan d'équilibrage de positions d'équilibrage possibles sur la roue pleine. Un comparateur est relié à la mémoire et au dispositif d'identification de positions et un dispositif d'affichage est raccordé au comparateur pour recevoir un signal du comparateur lorsque la position du dispositif palpeur atteint un plan d'équilibrage mémorisé. Le dispositif palpeur porte avantageusement une masse d'équilibrage pour permettre dans une deuxième étape la pose d'une masse d'équilibrage à un emplacement situé au plan d'équilibrage mémorisé.

Ce dispositif connu donne généralement satisfaction, mais n'est pas entièrement optimisé d'un point de vue ergonomique en raison du fait que l'opérateur doit observer le dispositif d'affichage pour vérifier que le plan d'équilibrage mémorisé est atteint. En outre, la pose de la masse d'équilibrage s'effectue du bas vers le haut c'est-à-dire dans la direction où l'opérateur ne peut pas utiliser la force résultant de son propre poids, ce qui entraîne une fatigue de l'opérateur après exécution de nombreuses opérations d'équilibrage successives.

L'invention a pour but de remédier aux inconvénients précités, en proposant une nouvelle équilibreuse simple d'emploi et ergonomique à utiliser, permettant à l'opérateur de poser automatiquement les masses d'équilibrage à l'emplacement déterminé sans risque d'erreur et sans fatigue.

L'invention a pour objet une équilibreuse par addition de masses d'équilibrage, notamment pour roue de véhicule, du type comportant un organe déplaçable parallèlement à l'axe d'entraînement en rotation du corps tournant ou de la roue à équilibrer et apte à pivoter sur un rayon de pivotement constant, de manière à définir un repère de coordonnées cylindriques dont l'axe est parallèle à l'axe d'entraînement en rotation du corps tournant ou de la roue à équilibrer, caractérisé en ce que l'organe déplaçable est monté à pivotement vers le bas pour définir dans une première étape un plan et un diamètre d'équilibrage correspondant à un emplacement visible et facilement accessible et pour poser dans une deuxième étape une masse d'équilibrage audit emplacement dans le plan et au diamètre d'équilibrage définis dans la première étape.

Selon d'autres caractéristiques de l'invention :
- l'organe déplaçable coopère avec une zone de préhension importante permettant l'application d'un effort important par l'opérateur vers le bas et radialement extérieurement lors de la pose d'une masse d'équilibrage,
- l'équilibreuse comporte au moins une butée réglable de positionnement fournissant un repérage longitudinal reproductible pour l'organe déplaçable,
- chaque butée réglable de positionnement est déplaçable en translation par rapport à l'organe déplaçable et apte à être immobilisée par rapport au bâti de l'équilibreuse par verrouillage d'un excentrique ou d'une came,
- l'équilibreuse comporte une centrale de traitement des mesures et de calcul recevant dans une première étape des signaux provenant de capteurs de déplacement longitudinal et de pivotement de l'organe déplaçable et commandant dans une deuxième étape le déplacement en rotation de la roue pour immobiliser celle-ci dans la direction radiale de l'organe déplaçable,
- l'équilibreuse est équipée d'échelles ou de secteurs gradués à lecture directe fournissant directement une mesure représentative d'un déplacement longitudinal et/ou d'un pivotement de l'organe déplaçable,
- l'organe déplaçable est équipé d'une tête ou d'un organe de préhension et de pose d'une masse d'équilibrage à une extrémité située du côté de la roue ou du corps tournant à équilibrer,
- l'organe déplaçable comporte, à une extrémité située du côté de la roue ou du corps tournant à équilibrer, une tête apte à s'appliquer sur une surface de la roue ou du corps tournant et articulée de manière à permettre un mouvement d'amplitude limitée par rapport à l'organe déplaçable,
- la tête est articulée à l'organe déplaçable, de manière à permettre un mouvement de pivotement limité d'axe parallèle à l'axe d'entraînement en rotation de la roue ou du corps tournant à équilibrer,
- la tête est articulée à l'organe déplaçable par une articulation sphérique, de manière à permettre un mouvement d'orientation sphérique limité.

L'invention sera mieux comprise grâce à la description qui va suivre donnée à titre d'exemple non limitatif en référence aux dessins annexés dans lesquels :
La figure 1 représente schématiquement le principe de mise en oeuvre de l'invention,
La figure 2 représente schématiquement une vue en perspective d'une équilibreuse selon l'invention,
La figure 3 représente schématiquement une vue en perspective d'une équilibreuse selon l'invention portant une roue à équilibrer,
La figure 4 représente schématiquement une vue partielle en élévation de face d'une équilibreuse selon l'invention,
La figure 5 représente schématiquement une vue partielle en coupe dont la ligne V-V de la figure 4 d'une équilibreuse selon l'invention.

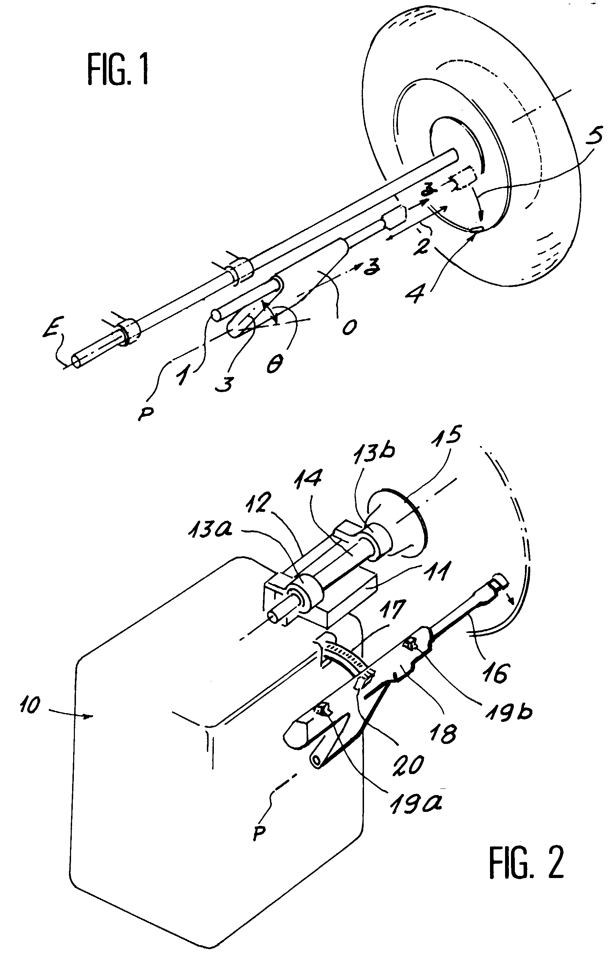

En référence à la figure 1, un organe déplaçable parallèlement à l'axe E d'entraînement en rotation du corps tournant ou de la roue à équilibrer est schématisé par l'organe 1 et la flèche 2. L'organe déplaçable 1 est apte à pivoter sur un rayon de pivotement 3 sensiblement constant, de manière à définir un repère de coordonnées cylindriques θ et z, dont l'axe Pz est parallèle à l'axe d'entraînement E en rotation du corps tournant ou de la roue à équilibrer. Dans son mouvement de pivotement, la projection de l'organe déplaçable 1 rencontre l'intérieur de la jante de la roue en 4. L'emplacement 4 de contact entre l'extrémité de l'organe déplaçable 1 est visible et facilement accessible par l'opérateur, par exemple pour le nettoyage ou le marquage d'une position.

Après la détermination de la valeur des masses d'équilibrage à additionner et le repérage, il suffit de relever l'organe 1 sans le déplacer parallèlement à l'axe d'entraînement en rotation du corps tournant ou de la roue à équilibrer, puis de poser dans une deuxième étape une masse d'équilibrage audit emplacement avec l'aide du même organe 1 déplaçable en faisant pivoter celui-ci vers le bas dans le sens de la flèche 5 pour appliquer fermement la masse à poser à l'emplacement déterminé par l'équilibreuse.

Dans cette disposition, l'organe mécanique correspondant au pivotement est espacé du corps tournant de la roue à équilibrer d'une distance permettant une bonne visibilité et un accès facile de l'opérateur, même avec des outils de nettoyage du genre brosse ou avec une main protégée par un gant de protection épais.

En outre, le rayon de pivotement 3 est choisi pour que, lors de l'application de l'organe déplaçable 1 vers le bas, l'angle correspondant à une application de l'organe 1 vers le bas pour appuyer et poser la masse d'équilibrage à l'emplacement 4 est choisi dans une plage comprise entre 10° et 70° vers le bas, de manière à permettre un appui efficace de l'opérateur utilisant le poids de son corps sur l'organe déplaçable 1.

A cet effet, on prévoit que l'organe d'équilibrage 1 présente de préférence une zone de préhension importante permettant l'application d'un effort important par l'opérateur vers le bas, dans la direction radiale extérieure en évitant ainsi tout coincement entre le bâti de l'équilibreuse et l'organe pivotant et en permettant à l'opérateur d'utiliser le poids de son corps pour exercer l'effort d'application de la masse à poser.

En référence à la figure 2, une équilibreuse selon l'invention comporte un bâti 10 schématisé sous la forme d'un prisme droit, portant une platine 11 à laquelle est fixé un support 12 de deux paliers 13a et 13b portant l'axe d'entraînement en rotation 14 muni d'un flasque de montage 15.

Selon l'invention, l'équilibreuse comporte un organe 16 déplaçable parallèlement à l'axe 14 et pouvant pivoter sur un rayon de pivotement constant. L'angle de pivotement par rapport à un axe de pivotement fixe par rapport au bâti 10 est repérable par un secteur gradué 17 et le déplacement longitudinal de l'organe 16 est repérable par rapport à un fourreau 18 dont la partie supérieure porte des butées de positionnement 19 a et 19b.

Le fourreau 18 présente une surface de préhension importante et comporte avantageusement une poignée 20 ou un organe de préhension permettant l'application du poids de l'opérateur sur l'ensemble pivotant lors de la pose d'une masse d'équilibrage.

Lors de l'équilibrage d'une série de roues comportant des jantes de caractéristiques identiques, il suffit de placer les butées de positionnement 19 a, 19b de l'organe déplaçable 16 dans les positions correspondant aux plans d'équilibrage spécifiques à ce type de jante et de basculer une seule fois l'ensemble pivotant pour relever la valeur de l'angle de pivotement correspondant au diamètre de pose. Une centrale de traitement des mesures et de calcul détermine alors automatiquement la valeur des masses d'équilibrage et leurs directions radiales de pose. Du fait que les butées de positionnement 19a, 19b servent également de butées lorsque l'organe déplaçable est utilisé pour la pose de la masse, l'équilibrage est ainsi réalisé de manière semi-automatique, puisqu'il suffit simplement de poser successivement les masses dans les plans d'équilibrage de la roue correspondante.

Avantageusement, la centrale de traitement des mesures et de calcul à microprocesseur commande un moyen d'entraînement de la roue à équilibrer ou du corps tournant en rotation pour l'immobiliser dans la position calculée correspondant à la pose de la masse d'équilibrage calculée par l'organe 16 muni à cet effet à une extrémité d'une tête ou d'un organe de préhension 21 et de pose d'une masse d'équilibrage.

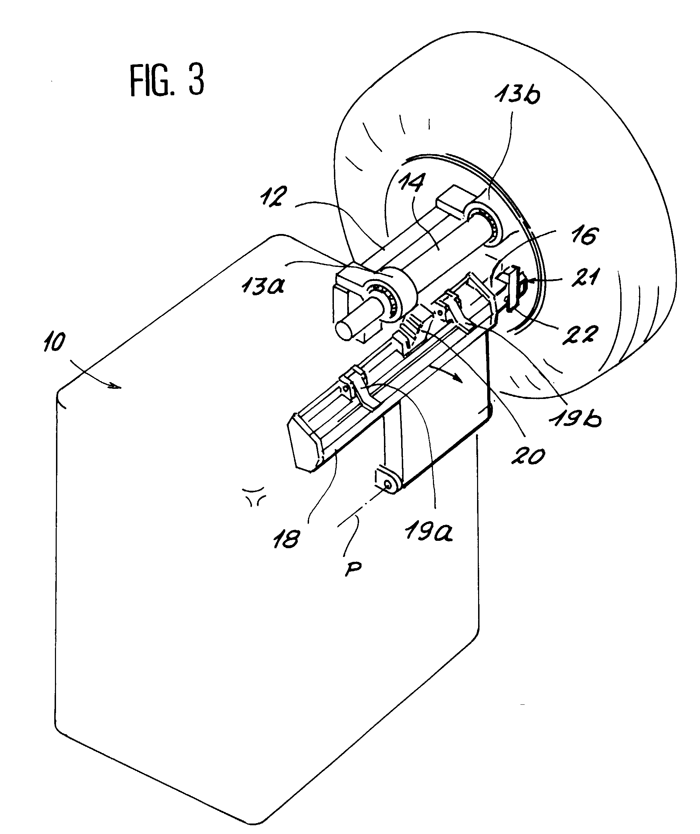

En référence à la figure 3, une équilibreuse selon l'invention est représentée en position relevée dans laquelle une masse 22 à coller est fixée à la tête ou organe de préhension 21. Il suffit à l'opérateur de tirer vers lui l'ensemble pivotant à l'aide de la poignée 20 pour appliquer la masse à coller sur la jante de la roue à équilibrer. La direction de l'effort exercé permet à l'opérateur d'utiliser toute sa force et d'appliquer son poids sur la manette 20 ou une autre zone de préhension sans éprouver de fatigue tout en ayant une bonne visibilité sur l'emplacement de pose.

Dans le cas de roues de petit diamètre, l'extrémité 21 formant tête ou organe de préhension de masse, est monté de préférence selon un montage flottant avec une amplitude de mouvement limitée, par exemple de plus ou moins 15° par rapport à une position médiane. Le mouvement d'amplitude limité peut être un mouvement de pivotement d'axe parallèle à l'axe d'entraînement en rotation de la roue ou peut être un mouvement d'articulation sphérique limité en amplitude.

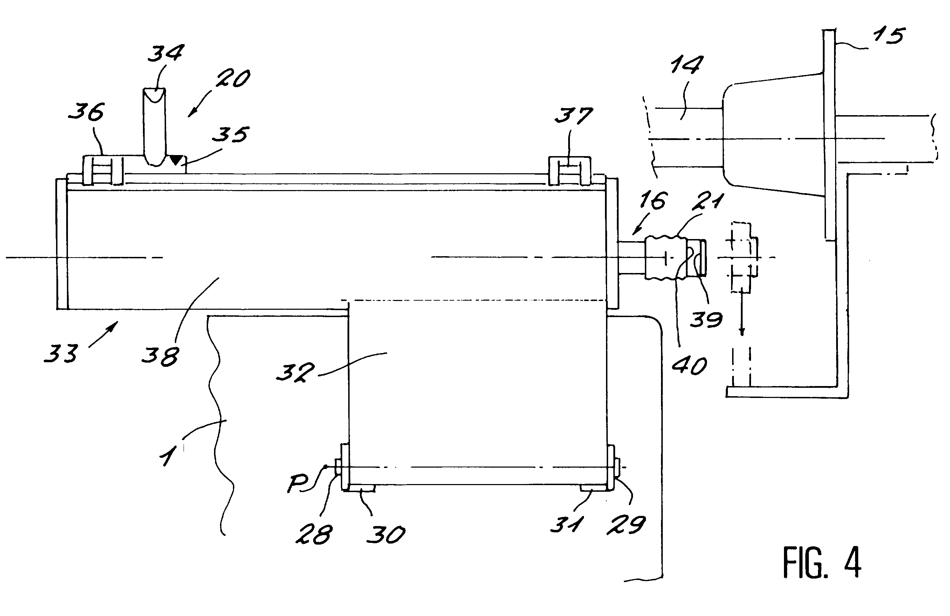

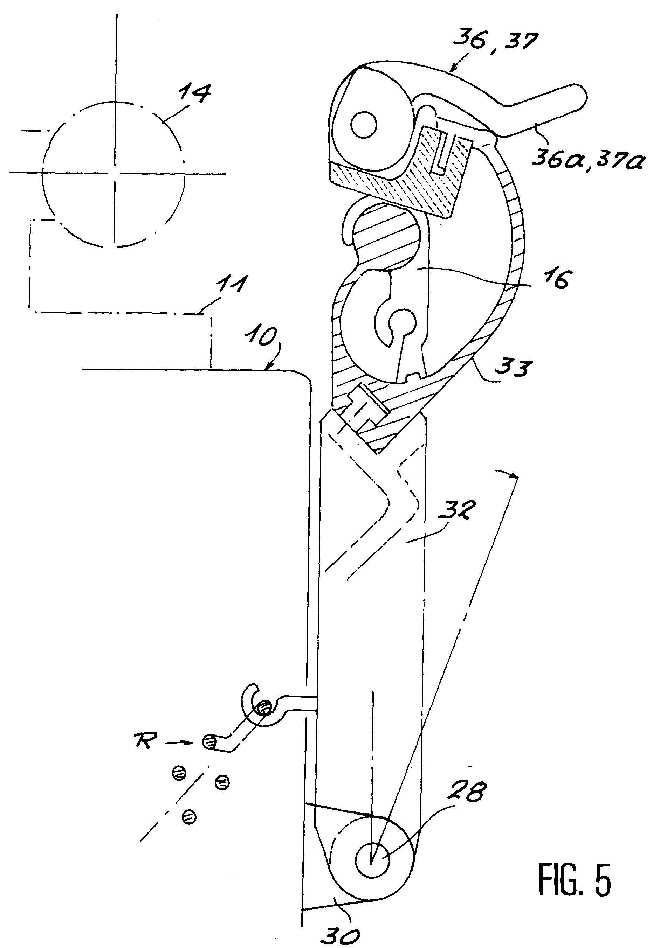

En référence aux figures 4 et 5, l'axe de pivotement P par rapport au bâti 1 est matérialisé par deux axes 28 et 29 montés dans deux équerres 30 et 31 solidaires du bâti. Sur les deux axes 28 et 29 est monté un profilé rigide 32 en aluminium de longueur réduite et présentant une extrémité supérieure dans laquelle est fixé un ensemble 33 portant l'organe déplaçable 16 avec son extrémité de préhension 21. L'organe déplaçable 16 est solidaire dans son déplacement de la manette 34 montée sur un support coulissant 35, de sorte que la course de l'organe déplaçable 16 est limitée par la venue en butée du support 35 sur une butée réglable 36 ou 37 pour assurer la pose d'une masse dans un premier plan d'équilibrage (butée 36) ou un deuxième plan d'équilibrage (butée 37).

Un deuxième profilé rigide 38 fixe par rapport au profilé 32 articulé à pivotement sur l'axe P présente une longueur relativement importante correspondant au logement de l'organe déplaçable 16 lorsqu'il est totalement rétracté et au guidage de celui-ci lors de son déploiement en direction du corps tournant ou de la roue à équilibrer.

Les profilés 32 et 38 présentent une rigidité importante et permettent l'application du poids et de la force de l'opérateur et la transmission de cet effort à l'organe déplaçable 16 en vue de l'application de la masse à poser sur la jante.

Avantageusement, l'ensemble pivotant est ramené en position adjacente au bâti par un ressort R ou autre moyen de rappel élastique, évitant toute interférence de l'ensemble pivotant avec la rotation de la roue ou du corps à équilibrer en dehors des opérations de prise d'informations géométriques ou de pose de masse.

Les butées réglables 36 et 37 sont de préférence des butées à excentrique ou à came verrouillables par simple serrage et appui sur un levier 36a, 37a et déverrouillables par simple levée du levier ou manette 36a, 37a.

L'invention s'applique à un premier mode de réalisation, dans lequel l'équilibreuse est équipée d'échelles ou de secteurs 17 gradués à lecture directe fournissant directement une mesure représentative d'un déplacement longitudinal de l'organe déplaçable 16 ou d'un pivotement de l'ensemble portant l'organe déplaçable 16. L'invention est également applicable à un deuxième mode de réalisation, dans lequel la centrale de traitement des mesures et de calcul reçoit des signaux en provenance de capteurs de déplacement longitudinal de l'organe déplaçable 16 et de pivotement de l'organe déplaçable 16, en vue de commander dans une deuxième étape après calcul de la direction radiale de pose et des masses d'équilibrage, un déplacement en rotation de la roue pour immobiliser celle-ci dans la direction radiale permettant la pose de la masse calculée dans la direction radiale d'immobilisation par l'organe déplaçable 16 équipé à cet effet de la tête de préhension 21.

Le mouvement de pivotement limité est réalisé de manière simple en prévoyant que la tête de préhension 21 est montée à l'aide d'une goupille pouvant osciller dans une lumière permettant un débattement angulaire de pivotement de l'ordre d'environ 15°.

L'organe ou tête de préhension 21 est de préférence un organe comportant un ressort de précontrainte en position de fermeture, apte à pincer la masse à coller entre une face droite 39 et une face de pincement 40.

L'invention décrite en référence à des modes de réalisation particuliers n'y est nullement limitée mais couvre au contraire toute modification de forme et toute variante de réalisation dans le cadre et l'esprit de l'invention.

## Revendications

1. Equilibreuse par addition de masses d'équilibrage, notamment pour roue de véhicule, du type comportant un organe (16) déplaçable parallèlement à l'axe d'entraînement (14) en rotation du corps tournant ou de la roue à équilibrer et apte à pivoter sur un rayon de pivotement constant, de manière à définir un repère de coordonnées cylindriques dont l'axe est parallèle à l'axe d'entraînement en rotation du corps tournant ou de la roue à équilibrer, caractérisé en ce que l'organe déplaçable (16) est monté à pivotement vers le bas pour définir dans une première étape un plan et un diamètre d'équilibrage correspondant à un emplacement visible et facilement accessible et pour poser dans une deuxième étape une masse d'équilibrage audit emplacement dans le plan et au diamètre d'équilibrage définis dans la première étape.

2. Equilibreuse selon la revendication 1, caractérisée en ce qui l'organe déplaçable (16) coopère avec une zone (20) de préhension importante permettant l'application d'un effort important par l'opérateur vers le bas et radialement extérieurement lors de la pose d'une masse d'équilibrage.

3. Equilibreuse selon la revendication 1 ou la revendication 2, caractérisée en ce que l'équilibreuse comporte au moins une butée (36, 37) réglable de positionnement fournissant un repérage longitudinal reproductible pour l'organe déplaçable.

4. Equilibreuse selon la revendication 3, caractérisée en ce que chaque butée (36, 37) réglable de positionnement est déplaçable en translation par rapport à l'organe déplaçable (16) et apte à être immobilisée par rapport au bâti (10) de l'équilibreuse par verrouillage (36a, 37a) d'un excentrique ou d'une came.

5. Equilibreuse selon l'une quelconque des revendications précédentes, caractérisée en ce qu'elle comporte une centrale de traitement des mesures et de calcul recevant dans une première étape des signaux provenant de capteurs de déplacement longitudinal et de pivotement de l'organe déplaçable (16) et commandant dans une deuxième étape le déplacement en rotation de la roue pour immobiliser celle-ci dans la direction radiale de l'organe déplaçable.

6. Equilibreuse selon l'une quelconque des revendications précédentes, caractérisée en ce que l'équilibreuse est équipée d'échelles ou de secteurs (17) gradués à lecture directe fournissant directement une mesure représentative d'un déplacement longitudinal et/ou d'un pivotement de l'organe déplaçable (16).

7. Equilibreuse selon l'une quelconque des revendications précédentes, caractérisée en ce que l'organe déplaçable (16) est équipé d'une tête (21) ou d'un organe de préhension et de pose d'une masse d'équilibrage à une extrémité située du côté de la roue ou du corps tournant à équilibrer.

8. Equilibreuse selon l'une quelconque des revendications précédentes, caractérisée en ce que l'organe déplaçable (16) comporte, à une extrémité située du côté de la roue ou du corps tournant à équilibrer, une tête (21) apte à s'appliquer sur une surface de la roue ou du corps tournant et articulée de manière à permettre un mouvement d'amplitude limitée par rapport à l'organe déplaçable.

9. Equilibreuse selon la revendication 8, caractérisée en ce que la tête (21) est articulée à l'organe déplaçable, de manière à permettre un mouvement de pivotement limité d'axe parallèle à l'axe d'entraînement en rotation de la roue ou du corps tournant à équilibrer.

10. Equilibreuse selon la revendication 8, caractérisée en ce que la tête (21) est articulée à l'organe déplaçable par une articulation sphérique, de manière à permettre un mouvement d'orientation sphérique limité.
